# EUROPÄISCHE PATENTSCHRIFT

(11) **EP 1 967 679 B1**
(45) Veröffentlichungstag und Bekanntmachung des Hinweises auf die Patenterteilung: **09.09.2009**
(21) Anmeldenummer: 08003068.7
(22) Anmeldetag: 20.02.2008
(51) Int. Cl.: E05D 11/10

(54) **Klappgehäuse**
Collapsible housing
Boîtier repliable

(30) Priorität: 05.03.2007 DE 102007010920
(43) Veröffentlichungstag der Anmeldung: 10.09.2008
(73) Patentinhaber: Viessmann Werke GmbH & Co. KG, 35107 Allendorf (DE)
(72) Erfinder: Gücker, Ludolf, 35116 Reddighausen (DE)
(74) Vertreter: Wolf, Michael

(56) Entgegenhaltungen:
- DE-A1- 3 921 753
- DE-C1- 19 713 759
- DE-U1- 9 304 244

## Beschreibung

Die Erfindung betrifft ein Klappgehäuse gemäß dem Oberbegriff des Patentanspruchs 1.

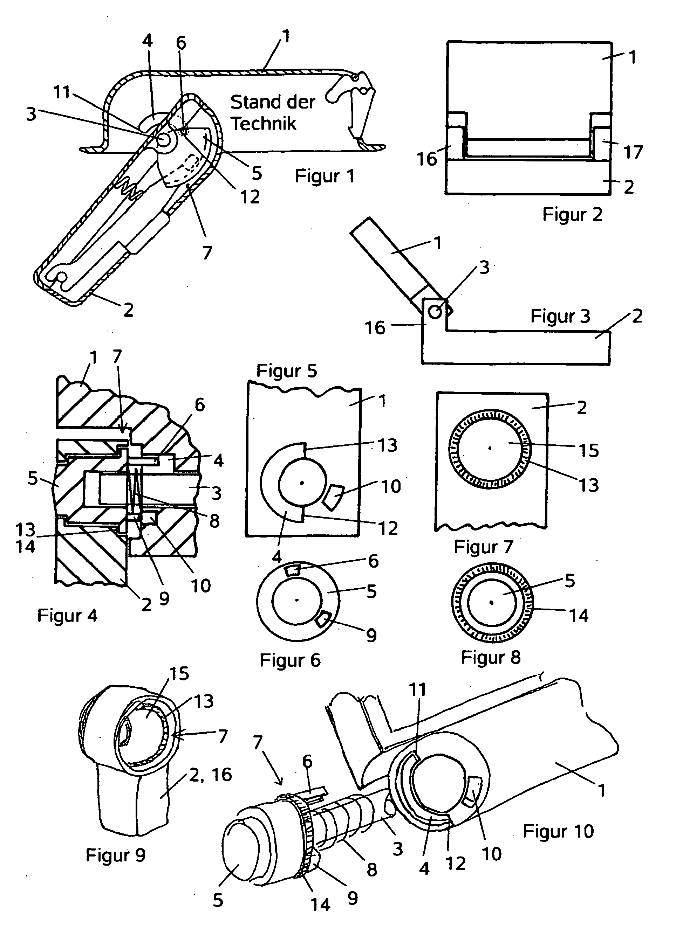

Ein Klappgehäuse der eingangs genannten Art ist nach der DE 39 21 753 A1 bekannt. Dieses besteht aus einem ersten und einem zweiten Gehäuseteil, die über eine Drehachse klappbar miteinander verbunden sind, wobei am ersten Gehäuseteil zentriert um die Drehachse und in einer senkrechten Ebene zu dieser eine Kreissegmentausnehmung (dort Kulissennut 9 genannt) vorgesehen ist, in die in jeder Klappstellung ein zapfenartiges, parallel zur Drehachse orientiertes und an einem Stellelement (dort Kreissegment 41 genannt) angeordnetes Anschlagelement (dort Mitnahmezapfen 43 genannt) eingreift, wobei das Stellelement und das zweite Gehäuseteil über ein benutzerzugängliches, lös- und verstellbares Fixierelement (dort u. a. Haken 39 genannt) miteinander verbunden sind (zum besseren Verständnis ist in Figur 1 diese Lösung mit den Bezugszeichen dieser Anmeldung dargestellt).

Das Fixierelement besteht beim Klappgehäuse nach der DE 39 21 753 A1 aus einem Kreissegment mit einem Bremsbelag der mit einem federbelasteten Haken zusammenwirkt. Diese insbesondere für Schminkspiegel in Kraftfahrzeugen vorgesehene Lösung ist somit gekennzeichnet durch eine Einrichtung zum frei wählbaren Einstellen einer jeweils gewünschten Schwenkposition der Klappe in der Gebrauchsstellung sowie zum Speichern der jeweils eingestellten Position, auch Memory-Effekt genannt.

Das erfindungsgemäße Klappgehäuse dient zwar insbesondere zur Aufnahme von Heizkesselregelungen, eine Beschränkung hierauf besteht aber, wie sich im weiteren noch zeigen wird, nicht.

Der Vollständigkeit halber wird noch auf die DE 93 04 244 U1 verwiesen, die im weiteren Sinne ein klappbares Gehäuse für eine Heizkesselregelung zeigt. Diesem Gehäuse fehlt aber jegliche Memory-Funktion, d. h. das Bedienteil ist lediglich zwischen zwei festen Anschlagpositionen frei verstellbar; die Anschläge selbst sind nicht einstellbar.

Der Erfindung liegt die Aufgabe zugrunde, ein Klappgehäuse der eingangs genannten Art bezüglich seiner Bedienbarkeit und auch bezüglich des Stellbereiches der Memory-Funktion zu verbessern. Die Memory-Funktion des Klappgehäuses nach der DE 39 21 753 A1 ist nämlich einerseits nur bei geöffneter Klappe zugänglich, andererseits ist der Anschlagverstellbereich auf etwa 40° (siehe Figur 2: 90° und Figur 3: 130°) beschränkt.

Diese Aufgabe ist mit einem Klappgehäuse der eingangs genannten Art nach der Erfindung durch die im Kennzeichen des Patentanspruchs 1 aufgeführten Merkmale gelöst.

Nach der Erfindung ist also vorgesehen, dass das Stellelement bezogen auf die Drehachse und gegen eine Rückstellkraft eines elastischen Elements zwischen einer ersten und einer zweiten Stellposition axialverstellbar ausgebildet ist und ein Mitnehmerelement aufweist, das in der zweiten Stellposition in eine Ausnehmung am ersten Gehäuseteil formschlüssig eingreift, wobei das Stellelement in der ersten Stellposition mittels des Fixierelements am zweiten Gehäuseteil drehfixiert ist.

Mit anderen Worten ausgedrückt, ist erfindungsgemäß im Unterschied zur DE 39 21 753 A1 ein axialverstellbares Stellelement vorgesehen, das neben dem zapfenförmigen Anschlagelement auch noch ein Mitnehmerelement aufweist. In der ersten Axialstellposition ist das Stellelement mit dem zweiten Gehäuseteil verrastet (vorzugsweise über ein Verzahnung). Das Mitnehmerelement hat in dieser Stellung keinen Kontakt zur am ersten Gehäuseelement vorgesehenen Ausnehmung. Die Gehäuseteile sind in dieser Stellung zueinander verstellbar, und zwar in einem Maximalwinkel, der sich aus der gewählten Stellung des Anschlagelements ergibt. Soll nun ein anderer Anschlag und damit ein anderer Maximalöffnungswinkel eingestellt werden, wird durch Axialverstellung des Stellelements das Mitnehmerelement in die Ausnehmung am ersten Gehäuseteil eingeführt, so dass das Stellelement nunmehr mit dem ersten Gehäuseteil drehfixiert ist. Durch Verschwenken der Gehäuseteile zueinander erhält das Stellelement eine neue Position im Verhältnis zum ersten Gehäuseteil. Diese neue Position wird durch Loslassen des Stellelements fixiert, da das elastische Element eine Rückstellkraft auf das Stellelement ausübt, die es wieder am zweiten Gehäuseteil einrasten läßt.

Diese Lösung benötigt vergleichsweise wenig Bauteile, ist robust und gut von außerhalb der beiden Gehäuseteile zugänglich. Der maximale Stellwinkel bei dieser Lösung beträgt bei sehr flachen Gehäuseteilen angenährt fast 360°, wobei typischerweise für Klappgehäuse zur Erzielung einer variablen, guten Bedienbarkeit bereits ein Verstellwinkel von 180° ausreichend ist (siehe Gehäuse von Laptops, Handys oder eben Heizungsregelungen).

Andere vorteilhafte Weiterbildungen ergeben sich aus den abhängigen Patentansprüchen.

Das erfindungsgemäße Klappgehäuse einschließlich seiner vorteilhaften Weiterbildungen gemäß der abhängigen Patentansprüche wird nachfolgend anhand der zeichnerischen Darstellung verschiedener bevorzugter Ausführungsbeispiele näher erläutert.

Es zeigt
- Figur 1: das Klappgehäuse gemäß der DE 39 21 753 A1;
- Figur 2: ein erfindungsgemäßes Klappgehäuse in Vorderansicht;
- Figur 3: das Klappgehäuse gemäß Figur 3 in Seitenansicht;
- Figur 4: den erfindungsgemäßen Memory-Mechanismus;
- Figur 5: in Draufsicht, teilweise geschnitten das erste Gehäuseteil mit einer Kreissegmentausnehmung für ein Anschlagelement und einer Ausnehmung für ein Mitnehmerelement;
- Figur 6: in Rückansicht das Stellelement mit Anschlagelement und Mitnehmerelement;
- Figur 7: in Draufsicht, teilweise geschnitten das zweite Gehäuseteil mit einem als Verzahnung ausgebildeten Fixierelement;
- Figur 8: in Vorderansicht das Stellelement mit dem als Verzahnung ausgebildeten Fixierelement;
- Figur 9: perspektivisch ein Teil des zweiten Gehäuseteils mit dem als Verzahnung ausgebildeten Fixierelement; und
- Figur 10: perspektivisch und als Explosionsdarstellung eine alternative Ausführungsform des ersten Gehäuseteils mit dem außenverzahnten Stellelement.

Das in den Figuren 1 (Stand der Technik) und 2 bis 10 (Erfindung) dargestellte Klappgehäuse besteht aus einem ersten und einem zweiten Gehäuseteil (1, 2), die über eine Drehachse 3 klappbar miteinander verbunden sind. Dabei ist am ersten Gehäuseteil 1 zentriert um die Drehachse 3 und in einer senkrechten Ebene zu dieser eine Kreissegmentausnehmung 4 vorgesehen ist, in die in jeder Klappstellung ein zapfenartiges, parallel zur Drehachse 3 orientiertes und an einem Stellelement 5 angeordnetes Anschlagelement 6 eingreift. Diese Kreissegmentausnehmung 4 ist bei der Ausführungsform gemäß Figur 10 wie beim Stand der Technik nach Figur 1 als kreisbogenförmige Führungsnut ausgebildet. Gemäß Figur 4 bzw. 5 kann die Kreissegmentausnehmung 4 aber auch zu einer Seite hin offen ausgebildet sein, d. h. eine nutförmige Ausbildung ist nicht zwingend erforderlich. Das Stellelement 5 und das zweite Gehäuseteil 2 sind über ein benutzerzugängliches, lös- und verstellbares Fixierelement 7 miteinander verbunden.

Wie eingangs erläutert, besteht das Fixierelement 7 bei der bekannten Lösung nach Figur 1 aus einer federbelasteten Reibkraftkupplung, die allerdings nur bei geöffnetem Klappgehäuse zugänglich ist.

Für das erfindungsgemäße Klappgehäuse ist nun wesentlich, dass das Stellelement 5 bezogen auf die Drehachse 3 und gegen eine Rückstellkraft eines elastischen Elements 8 zwischen einer ersten und einer zweiten Stellposition axialverstellbar ausgebildet ist und ein Mitnehmerelement 9 aufweist, das in der zweiten Stellposition in eine Ausnehmung 10 am ersten Gehäuseteil 1 formschlüssig eingreift, wobei das Stellelement 5 in der ersten Stellposition mittels des Fixierelements 7 am zweiten Gehäuseteil 2 drehfixiert ist.

Wie auch bei der bekannten Lösung nach Figur 1, weist die Kreissegmentausnehmung 4 des erfindungsgemäßen Klappgehäuses einen ersten und einen zweiten Anschlag 11, 12 auf. Die beiden Anschläge 11, 12 sind erfindungsgemäß aber bezogen auf die Drehachse 3 mehr als 90° (hier 180°) zueinander versetzt angeordnet, was zu einem erheblich vergrößerten Einstellbereich führt.

Ferner ist vorgesehen, dass das Fixierelement 7 aus einer einerseits am zweiten Gehäuseteil 2 und andererseits am Stellelement 5 angeordneten, ersten und zweiten Verzahnung 13, 14 gebildet ist. Die Verwendung einer Verzahnung statt einer Reibschlusskupplung führt dabei vorteilhaft zu einem Formschluss zwischen dem Stellelement 5 und dem Gehäuseteil 2, so dass das Anschlagelement 6 auch unter äußerer Krafteinwirkung (sofern diese nicht so groß ist, dass das Fixierelement zerstört wird) seine Position beibehält, d. h. es besteht nicht die Gefahr, dass der Anschlag wegen mangelnder Reibkraft verrutscht.

Besonders bevorzugt ist in diesem Zusammenhang vorgesehen, dass die erste Verzahnung 13 an einem inneren Umfangsrand einer das Stellelement 5 aufnehmenden, am zweiten Gehäuseteil 2 vorgesehenen Durchgangsöffnung 15 angeordnet ist (siehe hierzu insbesondere Figur 7 und 9). Ferner ist mit Verweis auf Figur 8 und 10 bevorzugt vorgesehen, dass die zweite Verzahnung 14 an einem äußeren Umfangsrand des Stellelements 5 angeordnet ist, wobei beide Verzahnungen 13, 14 in einer zur Drehachse 3 senkrecht orientierten Ebene angeordnet sind.

Zur Realisierung einer laptopartigen Gehäusegestaltung ist vorgesehen, dass der zweite Gehäuseteil 2 zwei distanziert zueinander angeordnete Achsaufnahmeelemente 16, 17 aufweist, zwischen denen der erste Gehäuseteil 1 gelagert ist. Hinsichtlich der erfindungsgemäßen Memory-Funktion ist dabei vorgesehen, dass das Stellelement 5 in einem der beiden Achsaufnahmeelemente 16, 17 angeordnet ist.

Zur Bereitstellung der eingangs genannten Rückstellkraft ist das elastische Element 8 insbesondere als Federelement, vorzugsweise, wie in den Figuren 4 und 10 dargestellt, als Schraubendruckfeder, ausgebildet, wobei das elastische Element 8 zwischen dem Stellelement 5 und dem ersten Gehäuseteil 1 gelagert ist und die Drehachse 3 umschliesst.

Die Drehachse 3 ist dabei als zylindrischer (stangenartiger) Körper ausgebildet und am zweiten Gehäuseteil 2 mindestens axialfixiert, vorzugsweise drehfixiert.

Besonders bevorzugt ist gemäß Figur 4 und 10 vorgesehen, dass das Stellelement 5 als Druckknopf ausgebildet und dazu sowohl axialverschieblich auf der Drehachse 3 als auch axialverschieblich im zweiten Gehäuseteil 2 gelagert ist.

Wie wiederum aus Figur 4 und 10 besonders gut ersichtlich, ist das Anschlagelement 6 in Axialrichtung gesehen länger als das Mitnehmerelement 9 ausgebildet und bezogen auf die Drehachse 3 axialverschieblich in der Kreissegmentausnehmung 4 angeordnet.

Das erfindungsgemäße Klappgehäuse bzw. die erfindungsgemäße Memory-Funktion wird, wie folgt, betätigt: Geht man z. B. von einer Ausgangsstellung wie in Figur 3 aus (bei der das Anschlagelement 6 am ersten Anschlag 11 anliegt und das Mitnehmerelement 9 zur Ausnehmung 10 fluchtet, aber nicht in diese eingreift) und möchte man den Anschlag so einstellen, dass das erste Gehäuseteil 1 zum zweiten Gehäuseteil 2 "nur noch" einen maximalen Öffnungswinkel von zum Beispiel 90° einnehmen kann, so wird zunächst durch Eindrücken des Stellelements 5 das Mitnehmerelement 9 in Formschluss mit der Ausnehmung 10 gebracht. Dabei löst sich die erste von der zweiten Verzahnung 13, 14, so dass beim Verschwenken des ersten Gehäuseteils 1 zum zweiten Gehäuseteil 2 das Stellelement 5 wegen des Formschlusses zwischen dem Mitnehmerelement 9 und der Ausnehmung 10 zusammen mit dem ersten Gehäuseteil 1 bewegt wird. Ist das erste Gehäuseteil 1 dann in der gewünschten (senkrechten) Position zum zweiten Gehäuseteil 2 kann das als Druckknopf ausgebildete Stellelement losgelassen werden. Die Federkraft führt dazu, dass die Verzahnungen 13, 14 wieder ineinandergreifen. Da sich ferner wegen des Formschlusses von Mitnehmerelement 9 und Ausnehmung 10 die Position des Anschlagelements 6 verändert hat, befindet sich der Anschlag nunmehr in der gewünschten Position und bleibt dort solange, bis der Druckknopf erneut betätigt und das Fixierelement 7 erneut verstellt wird.

### Bezugszeichenliste

- 1: erster Gehäuseteil
- 2: zweiter Gehäuseteil
- 3: Drehachse
- 4: Kreissegmentausnehmung
- 5: Stellelement
- 6: Anschlagelement
- 7: Fixierelement
- 8: elastisches Element
- 9: Mitnehmerelement
- 10: Ausnehmung
- 11: erster Anschlag
- 12: zweiter Anschlag
- 13: erste Verzahnung
- 14: zweite Verzahnung
- 15: Durchgangsöffnug
- 16: Achsaufnahmeelement
- 17: Achsaufnahmeelement

## Patentansprüche

1. Klappgehäuse, umfassend ein erstes und ein zweites Gehäuseteil (1, 2), die über eine Drehachse (3) klappbar miteinander verbunden sind, wobei am ersten Gehäuseteil (1) zentriert um die Drehachse (3) und in einer senkrechten Ebene zu dieser eine Kreissegmentausnehmung (4) vorgesehen ist, in die in jeder Klappstellung ein zapfenartiges, parallel zur Drehachse (3) orientiertes und an einem Stellelement (5) angeordnetes Anschlagelement (6) eingreift, wobei das Stellelement (5) und das zweite Gehäuseteil (2) über ein benutzerzugängliches, lös- und verstellbares Fixierelement (7) miteinander verbunden sind,
**dadurch gekennzeichnet,**
**dass** das Stellelement (5) bezogen auf die Drehachse (3) und gegen eine Rückstellkraft eines elastischen Elements (8) zwischen einer ersten und einer zweiten Stellposition axialverstellbar ausgebildet ist und ein Mitnehmerelement (9) aufweist, das in der zweiten Stellposition in eine Ausnehmung (10) am ersten Gehäuseteil (1) formschlüssig eingreift, wobei das Stellelement (5) in der ersten Stellposition mittels des Fixierelements (7) am zweiten Gehäuseteil (2) drehfixiert ist.

2. Klappgehäuse nach Anspruch 1,
wobei die Kreissegmentausnehmung (4) einen ersten und einen zweiten Anschlag (11, 12) aufweist,
**dadurch gekennzeichnet,**
**dass** die beiden Anschläge (11, 12) bezogen auf die Drehachse (3) mehr als 90° zueinander versetzt angeordnet sind,
wobei vorzugsweise das Fixierelement (7) aus einer einerseits am zweiten Gehäuseteil (2) und andererseits am Stellelement (5) angeordneten, ersten und zweiten Verzahnung (13, 14) gebildet ist, wobei vorzugsweise die erste Verzahnung (13) an einem inneren Umfangsrand einer das Stellelement (5) aufnehmenden, am zweiten Gehäuseteil (2) vorgesehenen Durchgangsöffnung (15) angeordnet ist, wobei vorzugsweise die zweite Verzahnung (14) an einem äußeren Umfangsrand des Stellelements (5) angeordnet ist, wobei vorzugsweise beide Verzahnungen (13, 14) in einer zur Drehachse (3) senkrecht orientierten Ebene angeordnet sind.

3. Klappgehäuse nach Anspruch 1 oder 2,
**dadurch gekennzeichnet,**
**dass** der zweite Gehäuseteil (2) zwei distanziert zueinander angeordnete Achsaufnahmeelemente (16, 17) aufweist, zwischen denen der erste Gehäuseteil (1) gelagert ist, wobei vorzugsweise das Stellelement (5) in einem der beiden Achsaufnahmeelemente (16, 17) angeordnet ist.

4. Klappgehäuse nach einem der Ansprüche 1 bis 3,
**dadurch gekennzeichnet,**
**dass** das elastische Element (8) als Federelement, vorzugsweise als Schraubendruckfeder, ausgebildet ist.

5. Klappgehäuse nach einem der Ansprüche 1 bis 4,
**dadurch gekennzeichnet,**
**dass** das elastische Element (8) zwischen dem Stellelement (5) und dem ersten Gehäuseteil (1) gelagert ist.

6. Klappgehäuse nach einem der Ansprüche 1 bis 5,
**dadurch gekennzeichnet,**
**dass** das elastische Element (8) die Drehachse (3) umschliesst.

7. Klappgehäuse nach einem der Ansprüche 1 bis 6,
**dadurch gekennzeichnet,**
**dass** die Drehachse (3) als zylindrischer Körper ausgebildet und am zweiten Gehäuseteil (2) mindestens axialfixiert, vorzugsweise drehfixiert, ist.

8. Klappgehäuse nach einem der Ansprüche 1 bis 7,
**dadurch gekennzeichnet,**
**dass** das Stellelement (5) axialverschieblich auf der Drehachse (3) gelagert ist.

9. Klappgehäuse nach einem der Ansprüche 1 bis 8,
**dadurch gekennzeichnet,**
**dass** das Stellelement (5) axialverschieblich im zweiten Gehäuseteil (2) gelagert ist.

10. Klappgehäuse nach einem der Ansprüche 1 bis 9,
**dadurch gekennzeichnet,**
**dass** das Stellelement (5) als Druckknopf ausgebildet ist.

11. Klappgehäuse nach einem der Ansprüche 1 bis 10,
**dadurch gekennzeichnet,**
**dass** das Anschlagelement (6) in Axialrichtung gesehen länger als das Mitnehmerelement (9) ausgebildet ist.

12. Klappgehäuse nach einem der Ansprüche 1 bis 11,
**dadurch gekennzeichnet,**
**dass** das Anschlagelement (6) bezogen auf die Drehachse (3) axialverschieblich in der Kreissegmentausnehmung (4) angeordnet ist.

## Claims

1. A folding housing, comprising a first and a second housing part (1, 2) which are connected to one another foldably about a pivot axis (3), wherein a circular-segment recess (4) is provided on the first housing part (1) centred about the pivot axis (3) and in a plane perpendicular thereto, in which recess a pin-like stop element (6) oriented parallel to the pivot axis (3) and arranged on an adjusting element (5) engages, wherein the adjusting element (5) and the second housing part (2) are connected to one another by means of a user-accessible, detachable and adjustable fixing element (7)
**characterised in**
**that** the adjusting element (5) is configured to be axially adjustable relative to the pivot axis (3) and against a restoring force of an elastic element (8) between a first and a second adjusting position and has an entrainer element (9) which engages positively into a recess (10) on the first housing part (1) in the second adjusting position, wherein the adjusting element (5) is rotationally fixed in the first adjusting position by means of the fixing element (7) on the second housing part (2).

2. The folding housing according to claim 1, wherein the circular segment recess (4) comprises a first and a second stop (11, 12),
**characterised in**
**that** the two stops (11, 12) are arranged offset with respect to one another relative to the pivot axis (3) by more than 90°, wherein the fixing element (7) is preferably formed from a first and second toothed structure (13, 14) arranged on the one hand on the second housing part (2) and on the other hand on the adjusting element (13, 14), wherein preferably the first toothed structure (13) is arranged on an inner peripheral edge of a through opening (15) which receives the adjusting element (5) and is provided on the second housing part (2), wherein preferably the second toothed structure (14) is arranged on an outer peripheral edge of the adjusting element (5), wherein preferably both toothed structures (13, 14) are arranged in a plane oriented perpendicularly to the pivot axis (3).

3. The folding housing according to claim 1 or 2,
**characterised in**
**that** the second housing part (2) comprises two axial receiving elements (16, 17) arranged at a distance from one another, between which the first housing part (1) is mounted, wherein preferably the adjusting element (5) is arranged in one of the two axial receiving elements (16, 17).

4. The folding housing according to any one of claims 1 to 3,
**characterised in**
**that** the elastic element (8) is configured as a spring element, preferably as a helical compression spring.

5. The folding housing according to any one of claims 1 to 4,
**characterised in**
**that** the elastic element (8) is mounted between the adjusting element (5) and the first housing part (1).

6. The folding housing according to any one of claims 1 to 5,
**characterised in**
**that** the elastic element (8) encloses the pivot axis (3).

7. The folding housing according to any one of claims 1 to 6,
**characterised in**
**that** the pivot axis (3) is configured as a cylindrical body and is at least axially fixed, preferably rotationally fixed, on the second housing part (2).

8. The folding housing according to any one of claims 1 to 7,
**characterised in**
**that** the adjusting element (5) is mounted axially displaceably on the pivot axis (3).

9. The folding housing according to any one of claims 1 to 8,
**characterised in**
**that** the adjusting element (5) is mounted axially displaceably in the second housing part (2).

10. The folding housing according to any one of claims 1 to 9,
**characterised in**
**that** the adjusting element (5) is configured as a push button.

11. The folding housing according to any one of claims 1 to 10,
**characterised in**
**that** the stop element (6) is configured as longer than the entrainer element (9) when viewed in the axial direction.

12. The folding housing according to any one of claims 1 to 11,
**characterised in**
**that** the stop element (6) is arranged axially displaceably in the circular segment recess (4) relative to the pivot axis (3).

## Revendications

1. Boitier rabattable, comprenant une première et une deuxième parties de boîtier (1, 2) reliées entre elles de façon pivotante par un axe de rotation (3), un évidement en forme de segment de cercle (4) étant prévu sur la première partie de boîtier (1), centré autour de l'axe de rotation (3) et dans un plan vertical par rapport à celui-ci, dans lequel s'engage un élément de butée (6) du genre pivot, orienté parallèlement à l'axe de rotation (3) et disposé sur un élément de réglage (5), dans chacune des positions de rabattement, l'élément de réglage (5) et la deuxième partie de boîtier (2) étant reliés entre eux par le biais d'un élément de fixation (7) amovible et réglable, accessible à l'usager,
**caractérisé en ce que**
l'élément de réglage (5) est conçu de manière à être axialement déplaçable par rapport à l'axe de rotation (3) et contre une force de rappel d'un élément élastique (8), entre une première et une deuxième position de réglage, et comporte un élément d'entraînement (9) s'engageant par complémentarité de forme dans un évidement (10) situé dans la première partie de boîtier (1), dans la deuxième position de réglage, l'élément de réglage (5) étant fixé en rotation à la deuxième partie de boîtier (2) au moyen de l'élément de fixation (7), dans la première position de réglage.

2. Boîtier rabattable selon la revendication 1,
dans lequel l'évidement en segment de cercle (4) comporte une première et une deuxième butées (11, 12),
**caractérisé en ce que**
les deux butées (11, 12) sont décalées de plus de 90° l'une par rapport à l'autre, par rapport à l'axe de rotation (3), l'élément de fixation (7) étant de préférence formé par une première et une deuxième dentures (13, 14) disposées d'une part sur la deuxième partie de boîtier (2) et d'autre part sur l'élément de réglage (5), la première denture (13) étant de préférence disposée sur un rebord périphérique interne d'une ouverture de passage (15) prévue dans la deuxième partie de boîtier (2), la deuxième denture (14) étant de préférence disposée sur un bord périphérique externe de l'élément de réglage (5), les deux dentures (13, 14) étant de préférence disposées dans un plan orienté perpendiculairement à l'axe de rotation (3).

3. Boîtier rabattable selon la revendication 1 ou 2,
**caractérisé en ce que**
la deuxième partie de boîtier (2) comporte deux éléments de réception d'axe (16, 17) disposés à distance l'un de l'autre, entre lesquels se trouve la première partie de boîtier (1), l'élément de réglage (5) étant de préférence disposé dans l'un des deux éléments de réception d'axe (16, 17).

4. Boîtier rabattable selon l'une des revendications 1 à 3,
**caractérisé en ce que**
l'élément élastique (8) est conçu comme un élément à ressort, de préférence comme un ressort de pression à boudin.

5. Boîtier rabattable selon l'une des revendications 1 à 4,
**caractérisé en ce que**
l'élément élastique (8) est installé entre l'élément de réglage (5) et la première partie de boîtier (1).

6. Boîtier rabattable selon l'une des revendications 1 à 5,
**caractérisé en ce que**
l'élément élastique (8) entoure l'axe de rotation (3).

7. Boîtier rabattable selon l'une des revendications 1 à 6,
**caractérisé en ce que**
l'axe de rotation (3) est conçu comme un corps cylindrique, tout en étant fixé au moins axialement, de préférence fixé en rotation, à la deuxième partie de boîtier (2).

8. Boîtier rabattable selon l'une des revendications 1 à 7,
l'élément de réglage (5) est installé sur l'axe de rotation (3) de façon déplaçable dans l'axe.

9. Boîtier rabattable selon l'une des revendications 1 à 8,
**caractérisé en ce que**
l'élément de réglage (5) est disposé dans la deuxième partie de boîtier (2) de façon déplaçable dans l'axe.

10. Boîtier rabattable selon l'une des revendications 1 à 9,
**caractérisé en ce que**
l'élément de réglage (5) est conçu comme un bouton pression.

11. Boîtier rabattable selon l'une des revendications 1 à 10,
**caractérisé en ce que**
l'élément de butée (6) est plus long que l'élément d'entraînement (9) vu dans le sens de l'axe.

12. Boîtier rabattable selon l'une des revendications 1 à 11,
**caractérisé en ce que**
l'élément de butée (6) est disposé dans l'évidement en segment de cercle (4) de façon déplaçable dans l'axe, par rapport à l'axe de rotation (3).
